# EUROPÄISCHE PATENTSCHRIFT

(11) **EP 1 069 010 B1**
(45) Veröffentlichungstag und Bekanntmachung des Hinweises auf die Patenterteilung: **02.10.2002**
(21) Anmeldenummer: 00203525.1
(22) Anmeldetag: 19.03.1997
(51) Int. Cl.: B60R 25/02

(54) **Kraftfahrzeug-Lenkradschloss**
Motor vehicle steering lock
Verrou de direction de véhicule automobile

(30) Priorität: 12.04.1996 DE 19614436
(43) Veröffentlichungstag der Anmeldung: 17.01.2001
(62) Teilanmeldung aus: 97104683.4
(73) Patentinhaber: Valeo GmbH & Co. Schliessysteme KG, 41468 Neuss (DE)
(72) Erfinder: Janz, Manfred, 45127 Essen (DE); Lieb, Kurt, 63500 Seligenstadt (DE); Richter, Martin, 63477 Maintal (DE)
(74) Vertreter: Croonenbroek, Thomas

(56) Entgegenhaltungen:
- DE-A- 2 053 775
- DE-U- 9 208 698
- GB-A- 2 037 867
- US-A- 5 186 031

## Beschreibung

Die Erfindung betrifft ein Kraftfahrzeug-Lenkradschloß mit einem Gehäuse und einem von einem Schlüssel betätigbaren Schließzylinder, wobei das Gehäuse eine Montageöffnung besitzt, die durch eine an dem Gehäuse befestigbare Abdeckplatte verdeckt ist.

Als relativ problematisch hat es sich bei dem erfindungsgemäßen Lenkradschloß erwiesen, die Abdeckplatte gegen Entfernen durch unbefugte Dritte zu sichern.

Aus der DE 92 08 698 U1 ist bereits ein Kraftfahrzeug-Lenkradschloß bekannt, welches aus einem Gehäuse mit einem Schließzylinder besteht, wobei der Schließzylinder einen Sperrbolzen zum Blockieren der Lenkradsäule betätigt, so daß bei abgezogenem Schlüssel der Sperrbolzen in eine entsprechende Ausnehmung der Lenkradsäule eingreift (Sperrposition). Ferner ist eine Sicherheitseinrichtung mit einem Sperrstift vorgesehen, welcher in der Sperrposition des Sperrbolzens in eine Ausnehmung des Sperrbolzens -oder eines den Sperrbolzen ansteuernden Teiles- eingreift und diesen blockiert, wenn der Schließzylinder oder das den Schließzylinder aufnehmende Gehäuse verwunden wird oder abbricht bzw, wenn das Lenkradschloß entfernt wird (gesicherte Stellung des Sperrbolzens).

Eine mit dem erfindungsgemäßen Kraftfahrzeug-Lenkradschloß vergleichbare Montageöffnung mit Abdeckplatte offenbart die DE 92 08 698 U1 nicht. Außerdem ist bei dem bekannten Lenkradschloß u.a. nachteilig, daß es aufwendig aufgebaut ist und aus einer relativ hohen Anzahl von Einzelelementen besteht.

Der Erfindung liegt die Aufgabe zugrunde, ein Kraftfahrzeug-Lenkradschloß mit einer eine Montageöffnung verdeckenden Abdeckplatte anzugeben, welches einfach montierbar und trotzdem gegen Manipulationen durch unbefugte Dritte geschützt ist.

Diese Aufgabe wird erfindungsgemäß durch die Merkmale des Anspruchs 1 gelöst. Weitere besonders vorteilhafte Ausgestaltungen der Erfindung offenbaren die Unteransprüche.

Die Erfindung beruht auf dem Gedanken, die Abdeckplatte mit einer Abkröpfung zu versehen, die eine Ausnehmung aufweist, in der sich ein in Richtung der Längsachse des Schließzylinders erstreckendes Abzugssicherungsblech befindet, welches die Abdeckplatte riegelartig sichert. Hierzu stützt sich das Abzugssicherungsblech einerseits in einer Führungsnut des Gehäuses ab. Andererseits ist das Abzugssicherungsblech derart in der Ausnehmung der Abkröpfung angeordnet, daß es aus dieser Ausnehmung in der montierten Stellung der Abdeckplatte nicht herausgezogen werden kann.

Um zu vermeiden, daß Unbefugte nach dem Abbrechen des Schließzylinders die abgebrochenen Reste herausziehen können, um dann vom Fahrzeuginnenraum aus mit einem stangenförmigen Spezialwerkzeug den Sperrstift aus der entsprechenden Ausnehmung des Sperrgliedes zu ziehen, weist das Abzugssicherungsblech im Bereich der Ausnehmung der Abkröpfung eine nutenförmige Ausnehmung auf, wobei durch die Abdeckplatte eine Hinterschneidung entsteht. Damit das Abzugssicherungsblech außerdem in seiner Längsrichtung etwas verschiebbar ist, ist die Länge der nutenförmigen Ausnehmung größer als die Länge der Ausnehmung der Abkröpfung.

Um ferner zu vermeiden, daß an dem abgebrochenen Ende des Abzugssicherungsbleches im Bereich des Sperrstiftes durch einen Unbefugten versucht werden könnte, durch Verdrehen des Abzugssicherungsbleches dieses aus der Ausnehmung der Abkröpfung zu ziehen, ist die Sollbruchstelle vorzugsweise in der Nähe der Abdeckplatte angeordnet.

Für den Fall, daß ein zusätzlicher Sperrstift zur Sicherung des Sperrbolzens vorgesehen ist, ist dieser im Bereich des zweiten Endes des Abzugssicherungsbleches angeordnet, derart, daß das Ende des Abzugssicherungsbleches in der ungesicherten Stellung des Sperrbolzens den in dem Lenkradschloß-Gehäuse gelagerten und mit Federkraft vorgespannten Sicherungsstift zurückhält. Das Abzugssicherungsblech weist mindestens eine Sollbruchstelle zwischen der Abdeckplatte und der Schließzylindervorderseite auf. Bei Herausreißen oder Abbrechen des Schließzylinders bricht das Ende des Abzugssicherungsbleches ab, gibt den Sicherungsstift frei und sichert den Sperrbolzen. Außerdem wird die Öffnung der Ausnehmung der Abkröpfung zum Sicherungsstift blockiert.

Auch bei einer Manipulation an der Abdeckplatte wird das in der Ausnehmung der Abkröpfung befindliche Abzugssicherungsblech verschoben, was ebenfalls zu einer Freigabe des Sicherungsstiftes und damit zu einer Sicherung des Sperrbolzens führt.

Als vorteilhaft hat es sich erwiesen, den Sperrstift zweiteilig als abgesetzten Zylinder auszubilden. Dabei greift in der gesicherten Stellung des Sperrbolzens der erste Teil des Zylinders mit dem kleineren Durchmesser in die Ausnehmung des Sperrgliedes ein. Der zweite Teil des Zylinders stützt sich in der ungesicherten Stellung des Sperrbolzens an dem zweiten Ende des Abzugssicherungsbleches ab.

Weitere Einzelheiten und Vorteile der Erfindung ergeben sich aus den folgenden anhand von Figuren erläuterten Ausführungsbeispielen. Es zeigen:
- Fig.1: eine perspektivische Ansicht eines ersten erfindungsgemäßen Lenkradschlosses mit einer zusätzlichen Sicherheitseinrichtung, wobei aus Übersichtlichkeitsgründen nicht alle Teile des Schlosses dargestellt sind;
- Fig.2: eine Seitenansicht des in Fig.1 dargestellten Lenkradschlosses;
- Fig.3 und 4: zwei Querschnitte durch das in Fig.2 dargestellte Lenkradschloß entlang der dort mit III-III und IV-IV bezeichneten Schnittlinien;
- Fig.5: die Seitenansicht eines Abzugssicherungsbleches und
- Fig.6 und 7: eine perspektivische Ansicht eines zweiten erfindungsgemäßen Lenkradschlosses ohne zusätzliche Sicherheitseinrichtung vor und nach der Montage der Abdeckplatte.

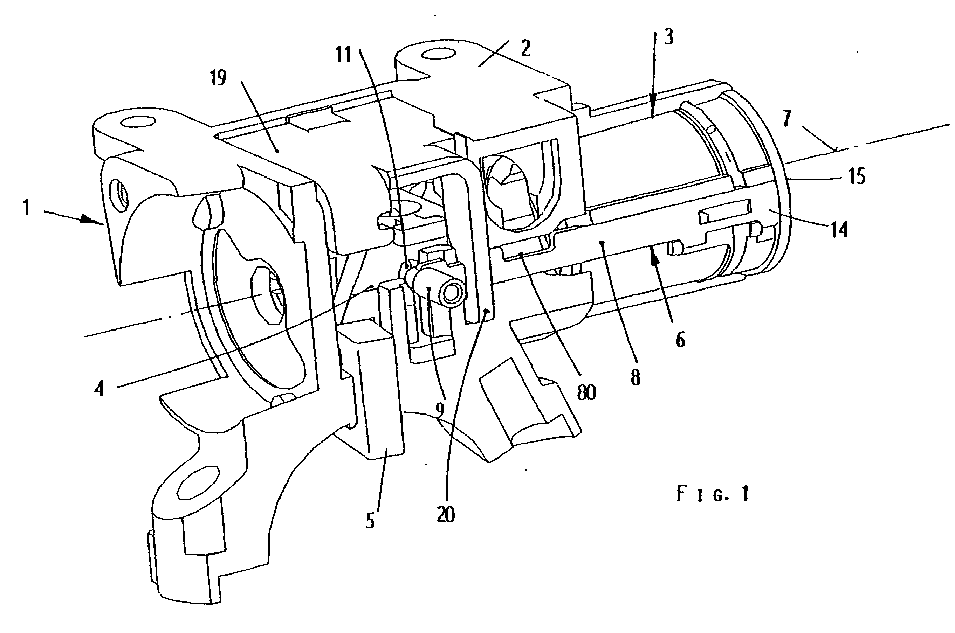

In den Fig.1 und 2 ist mit 1 ein Kraftfahrzeug-Lenkradschloß bezeichnet, welches ein Gehäuse 2 und einen von einem Schlüssel (nicht dargestellt) betätigbaren Schließzylinder 3 umfaßt. Der Schließzylinder 3 ist über einen Mitnehmer 4 mit einem Sperrbolzen 5 verbunden, welcher zum Blockieren einer aus Übersichtlichkeitsgründen nicht dargestellten Lenkradsäule des entsprechenden Fahrzeuges bei abgezogenem Schlüssel in eine entsprechende Ausnehmung der Lenkradsäule eingreift (Sperrposition).

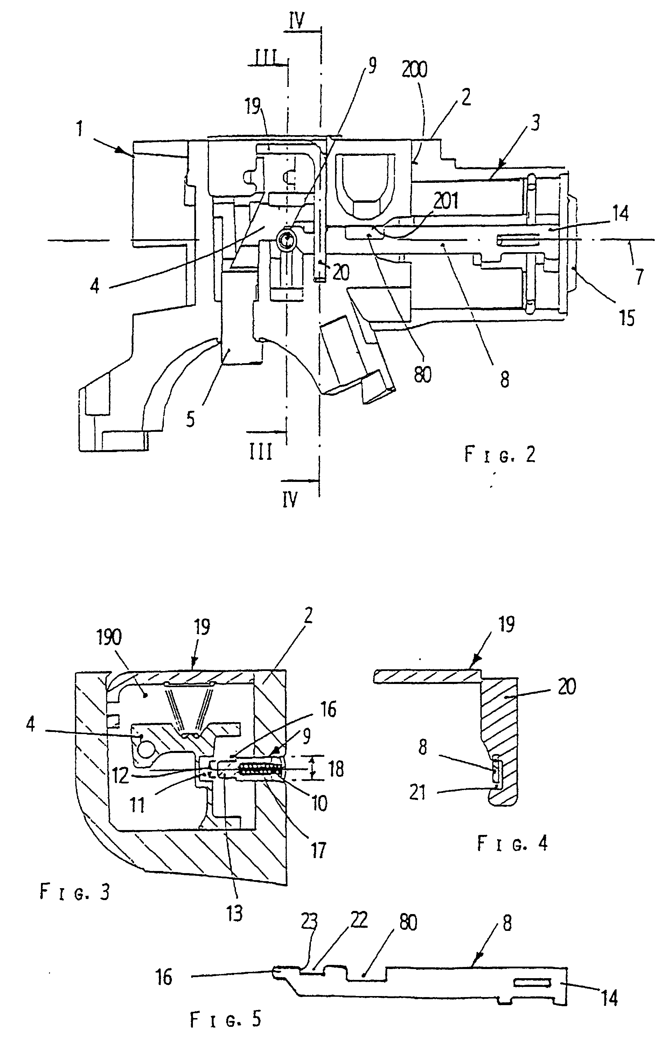

Ferner ist eine Sicherheitseinrichtung 6 vorgesehen, die aus einem sich in Richtung der Längsachse 7 des Schließzylinders 3 erstreckenden stegförmigen Abzugssicherungsblech 8 mit einer Sollbruchstelle 80 und einem zylinderförmigen Sperrstift 9 besteht (Fig.5). Der Sperrstift 9 ist mittels einer Feder 10 (Fig.3) vorgespannt und greift in seiner Sperrstellung in eine Ausnehmung 11 des Mitnehmers 4. Der Sperrstift 9 besitzt die Form eines abgesetzten Zylinders, wobei der erste, den kleineren Durchmesser 12 aufweisende Teil 13 der Ausnehmung 11 des Mitnehmers 4 zugewandt ist.

während das erste Ende 14 des Abzugssicherungsbleches 8 im Bereich der Schließzylindervorderseite 15 befestigt ist, hintergreift das zweite nasenförmig ausgebildete Ende 16 des Abzugssicherungsbleches 8 den zweiten Teil 17 des Sperrstiftes 9 mit dem größeren Durchmesser 18 und hält den federvorgespannten Sperrstift 9 zurück.

Im Bereich des Mitnehmers 4 weist das Lenkradschloß 1 eine Abdeckplatte 19 zur Abdeckung einer Montageöffnung 190 auf, die eine Abkröpfung 20 mit einer Ausnehmung 21 besitzt (Fig.4). In der Ausnehmung 21 wird das Abzugssicherungsblech 8 geführt. Das Abzugssicherungsblech 8 weist in diesem Bereich eine nutenförmige Ausnehmung 22 auf, die etwas länger gewählt ist als die Länge der Ausnehmung 21 der Abdeck-platte 19. Außerdem ist die Abdeckplatte 19 derart an dem Gehäuse 2 befestigt, daß durch die Seitenwand 23 (Fig.5) der Ausnehmung 22 eine Hinterschneidung entsteht, so daß das Abzugssicherungsblech 8 zwar etwas in Richtung der Längsachse 7 verschoben, nicht aber aus der Ausnehmung 21 herausgezogen werden kann. Das Abzugssicherungsblech 8 stützt sich zwischen der Abkröpfung 20 und dem schließzylinderseitigen Ende 200 des Gehäuses in einer Führungsnut 201 des Gehäuses ab.

Im folgenden wird auf die Wirkungsweise des erfindungsgemäßen Lenkradschlosses 1 näher eingegangen:

Das Lenkradschloß möge sich in der in Fig.1 dargestellten Sperrposition befinden, bei der der Sperrbolzen 5 sich in seiner unteren Position befindet und in eine entsprechende Ausnehmung der nicht dargestellten Lenkradsäule eingreift. Wird nun versucht, durch gewaltsames Verdrehen den Schließzylinder 3 zu zerbrechen, um von der Innenseite des Fahrzeuges an den Sperrbolzen 5 zu gelangen, so wird dabei gleichzeitig das Abzugssicherungsblech 8 im Bereich der Sollbruchstelle 80 zerstört. Das Abzugssicherungsblech 8 verschiebt sich etwas in Richtung auf den abgebrochenen oder verdrehten Schließzylinder 3 und das nasenförmige Ende 16 des Abzugssicherungsbleches 8 gibt den federbelasteten Sperrstift 9 frei, so daß der erste Teil 13 des Sperrstiftes 9 in die Ausnehmung 11 des Mitnehmers 4 eingeschoben und der Sperrbolzen 5 in seiner Sperrposition gesichert wird.

Aufgrund der gewählten Breite der Ausnehmung 21 der Abkröpfung und des Abzugssicherungsbleches B im Bereich der Ausnehmung 21 kann der in der Ausnehmung befindliche Teil des Abzugssicherungsbleches 8 nicht aus dieser herausgezogen werden. Dadurch kann ein unbefugter Dritter, etwa mit einem Spezialwerkzeug, nicht durch die Ausnehmung 21 hindurch an den Sperrbolzen 5 gelangen und diesen zurückziehen.

Auch bei einem Versuch, an den Sperrbolzen 5 über die Abdeckplatte 19 zu gelangen, wird durch leichtes Anheben der Abdeckplatte 19 und damit auch der Abkröpfung 20 das Abzugssicherungsblech 8 leicht angehoben und der Sperrstift 9 freigegeben. Der Sperrbolzen 5 wird in seiner Sperrposition auch in diesem Fall durch den Sperrstift 9 gesichert.

Die Erfindung ist selbstverständlich nicht auf das vorstehend beschriebene Ausführungsbeispiel beschränkt. So braucht beispielsweise der Sperrstift nicht als abgesetzter Zylinder ausgestaltet sein. Vielmehr ist lediglich erforderlich, daß der Sperrstift durch ein Sperrglied daran gehindert wird, in der ungesicherten Stellung des Sperrbolzens in die entsprechende Ausnehmung des Sperrbolzens einzudringen.

Um ein Herausziehen des Abzugssicherungsbleches aus der Führungsnut der Abdeckplatte zu verhindern, braucht nicht notwendigerweise -wie in Fig.4 dargestellt- die Mittelachse des Abzugsbleches gegenüber der Mittelachse der Ausnehmung der Abkröpfung verschoben sein, sondern es kann auch die Breite der Ausnehmung, etwa gleich der Breite des Abzugssicherungsbleches im Bereich der nutenförmigen Ausnehmung, gewählt werden.

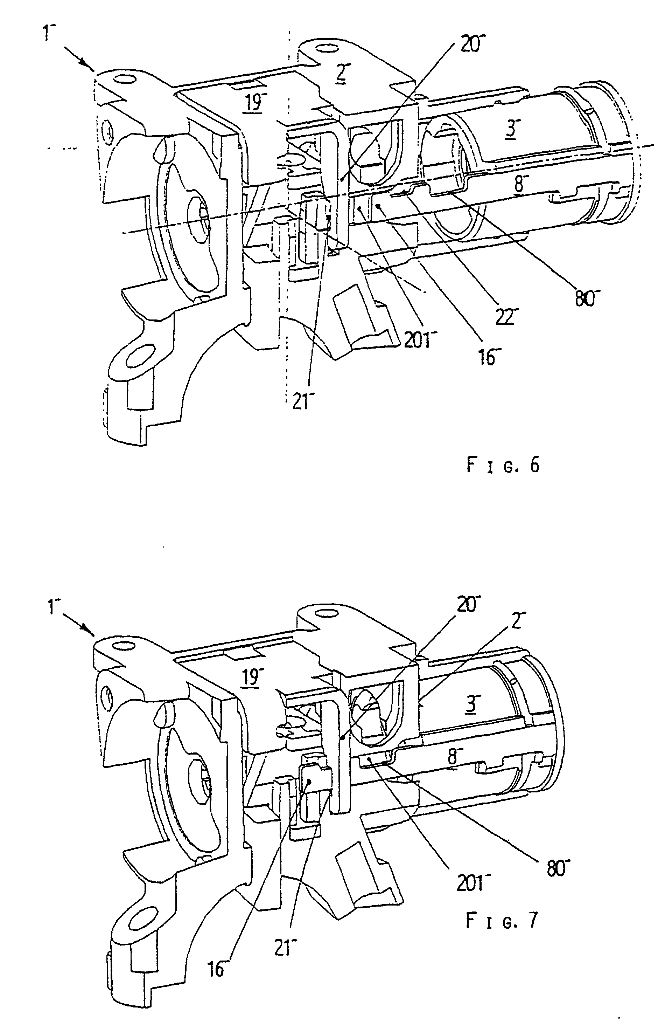

Die Erfindung bezieht sich auch nicht ausschließlich auf Lenkradschlösser mit zusätzlicher Sicherheitseinrichtung 6. Vielmehr betrifft die Erfindung auch solche Lenkradschlösser, bei denen eine zusätzliche Sicherheitseinrichtung fehlt und bei denen lediglich eine Sicherung der Abdeckplatte gegen unbefugtes Aushebeln und Entfernen der Abdeckplatte erforderlich ist. Ein entsprechendes Lenkradschloß zeigen die Fig.6 und 7, die im wesentlichen dem in Fig.1 dargestellten Ausführungsbeispiel entsprechen:

Mit 1' sind dabei das Lenkradschloß, mit 2' das Gehäuse und mit 3' der Schließzylinder bezeichnet. Eine entsprechende Montageöffnung ist wiederum durch eine Abdeckplatte 19' mit einer Abkröpfung 20' verschlossen. Zur Verriegelung der Abdeckplatte 19' ist ein Abzugssicherungsblech 8' mit einer Ausnehmung 22' und einer Sollbruchstelle 80' durch eine entsprechende Ausnehmung 21' der Abkröpfung 20' geführt. Außerdem stützt sich das Abzugssicherungsblech 8' in einer Führungsnut 201' des Gehäuses 2' ab.

Fig.6 zeigt die etwas angehobene Stellung der Abdeckplatte 19' bei der Montage des Schließzylinders mit Abzugssicherungsblech 8'. In dieser Stellung kann das zweite Ende 16' des Abzugssicherungbleches 8' durch die Ausnehmung 21' der Abkröpfung 20' geschoben werden. Anschließend wird die Abdeckplatte 19' nach unten gedrückt und befestigt (z.B. verstemmt), so daß das Abzugssicherungsblech 8' auch dann nicht aus der Ausnehmung 21' herausgezogen werden kann, wenn es etwa durch gewaltsames Verdrehen des Schließzylinders an der Sollbruchstelle 80' bricht. Eine Demontage des Abzugssicherungsbleches 8' ist -wie die Montage- nur bei definiert angehobener Abdeckplatte möglich.

### Bezugszeichenliste

- 1,1': Kraftfahrzeug-Lenkradschloß, Lenkradschloß
- 2,2': Gehäuse
- 3,3': Schließzylinder
- 4: Mitnehmer, Sperrbolzen ansteuerndes Teil
- 5: Sperrbolzen
- 6: Sicherheitseinrichtung
- 7: Längsachse
- 8,8': Abzugssicherungsblech
- 9: Sperrstift
- 10: Feder
- 11: Ausnehmung
- 12: Durchmesser (erste Teil des Sperrstiftes)
- 13: erste Teil (Sperrstift)
- 14: erste Ende (Abzugssicherungsblech)
- 15: Schließzylindervorderseite
- 16,16': zweite, nasenförmige Ende (Abzugssicherungsblech)
- 17: zweite Teil (Sperrstift)
- 18: Durchmesser (zweite Teil des Sperrstiftes)
- 19,19': Abdeckplatte
- 20,20': Abkröpfung
- 21,21': Ausnehmung
- 22,22': nutenförmige Ausnehmung
- 23: Seitenwand

- 80,80': Sollbruchstelle
- 190: Montageöffnung
- 200: Ende (Gehäuse)
- 201,201': Führungsnut

## Patentansprüche

1. Kraftfahrzeug-Lenkradschoß mit einem Gehäuse (2,2') und einem von einem Schlüssel betätigbaren Schließzylinder (3, 3'), der auf einen Sperrbolzen (5) zum Blockieren der Lenkradsäule einwirkt, derart, daß bei abgezogenem Schlüssel der Sperrbolzen (5) in eine entsprechende Ausnehmung der Lenkradsäule eingreift, wobei das Gehäuse (2, 2') eine Montageöffnung (190) besitzt, die durch eine an dem Gehäuse (2, 2') befestigbare Abdeckplatte (19, 19') geschützt ist, wobei ein gegen den Druck einer Feder (10) in seiner entsperrten Stellung gehaltener Sperrstift (9) vorgesehen ist, der so angeordnet ist, daß der Sperrstift (9) freigegeben wird und in eine Ausnehmung (11) des Sperrbolzens (5) oder eines den Sperrbolzen (5) ansteuernden Teiles (4) in der Sperrposition eingreift und dieses blockiert, wenn die Abdeckplatte (19) angehoben wird.

2. Kraftfahrzeug-Lenkradschoß nach Anspruch 1, wobei der Sperrstift (9) zweiteilig als abgesetzter Zylinder ausgebildet ist, wobei der erste Teil (13) des Zylinders mit dem kleineren Durchmesser (12) in die Ausnehmung (11) des Sperrbolzens (5) eingreifbar angeordnet ist.

3. Kraftfahrzeug-Lenkradschoß nach Anspruch 1 oder 2, wobei die Abdeckplatte mit einer Abkröpfung versehen ist, welche bei Anhebung der Abdeckplatte die Freigabe des Sperrstifts steuert.

## Claims

1. Motor vehicle steering wheel lock having a casing (2,2') and a locking cylinder (3, 3') which is adapted to be operated by a key and which acts on a locking bolt (5) to immobilise the steering column, in such a manner that whenever the key is withdrawn, the locking bolt (5) engages in a corresponding recess in the steering column, the casing (2, 2') possessing an assembly opening (190) which is protected by a cover plate (19, 19') adapted to be fastened to the casing (2, 2'), where a locking pin (9) is provided which is held in its unlocked position against the force of a spring (10) and which is so arranged that whenever the cover plate (19) is raised, the locking pin (9) is released and engages in a recess (11) in the locking bolt (5) or in a part (4) which controls the locking bolt (5) in the locking position and immobilises the latter.

2. Motor vehicle steering wheel lock according to claim 1, where the locking pin (9) is constructed in two parts as an offset cylinder, the first part (13) of the cylinder having the smaller diameter (12) being arranged so as to be able to engage in the recess (11) in the locking bolt (5).

3. Motor vehicle steering wheel lock according to claim 1 or 2, where the cover plate is provided with a bend which controls the release of the locking pin whenever the cover plate is raised.

## Revendications

1. Antivol de direction d'un véhicule à moteur, comprenant un boîtier (2, 2') et un cylindre de fermeture (3, 3') actionnable par une clé, qui agit sur un pêne de blocage (5) pour bloquer la colonne de direction, de telle sorte que lorsque la clé est retirée, le pêne de blocage (5) vienne en prise dans un évidement correspondant de la colonne de direction, où le boîtier (2, 2') possède une ouverture de montage (190) qui est protégée par une plaque de recouvrement (19, 19') pouvant être fixée sur le boîtier (2, 2'), dans lequel est prévue une tige de blocage (9) soit maintenue dans sa position déverrouillée contre la pression d'un ressort (10), la tige de blocage (9)étant agencée de manière à ce qu'elle soit libérée et vienne en prise dans la position de blocage dans un évidement (11) du pêne de blocage (5) ou d'une pièce (4) commandant le boulon de blocage (5) et bloque ce dernier, lorsque la plaque de recouvrement (19) est soulevée.

2. Antivol de direction d'un véhicule à moteur selon la revendication 1, où la tige de blocage (9) est conçue en deux parties sous la forme d'un cylindre étagé, la première partie (13) du cylindre avec le plus petit diamètre (12) étant disposée de manière à pouvoir venir en prise dans l'évidement (11) du pêne de blocage (5).

3. Antivol de direction d'un véhicule à moteur selon la revendication 1 ou 2, dans lequel la plaque de recouvrement comprend une partie coudée qui commande la libération de la tige de blocage par soulèvement de la plaque de recouvrement.
